# EUROPEAN PATENT APPLICATION

(11) **EP 4 018 964 A1**
(43) Date of publication of application: **29.06.2022**
(21) Application number: 20020660.5
(22) Date of filing: 26.12.2020
(51) Int. Cl.: A61C 8/00, A61C 13/083, A61C 5/70

(54) **ONE-PIECE TISSUE LEVEL CERAMIC DENTAL IMPLANT WITH A DUAL INTERNAL AND EXTERNAL CONNECTION FOR A CUSTOM-MADE DENTAL RESTORATION**

(71) Applicant: Ceraroot S.L., 08520 Les Franqueses del Vallès, Barcelona (ES)
(72) Inventor: OLIVA-OCHOA, Josep, 08520 Les Franqueses del Vallès Barcelona (ES); OLIVA-OCHOA, Xavier, Santa Monica, CA 90405 (US)

(57) **Abstract**

One-piece tissue level ceramic dental implant with a dual internal and external connexion that has the advantages of a one-part dental implant and the two-part dental implant systems. The advantages of the one part is, first, economic as there are less parts, second, mechanical as there is a direct force transmission between the prosthesis and the implant providing greater fracture resistance, and third, biological as there are no gaps between components/ parts where bacteria can grow. The advantages of the two-part implant systems are, first, that the implant does not have an abutment that is sticking out of the gum into the oral cavity that can be influenced by external factors like chewing forces leading to a higher initial failure rate, and, second, the possibility and freedom to customize the crown without limitations of the abutment in one-part implant systems.

## Description

### CROSS-REFERENCE TO RELATED APPLICATIONS

Not Applicable

### REFERENCE TO SEQUENCE LISTING, A TABLE, OR A COMPUTER PROGRAM LISTING COMPACT DISK APPENDIX

Not Applicable

### BACKGROUND OF THE INVENTION

### 1. Field of the Invention

The invention lies in the field of dental medicine and relates to a ceramic implant system comprising a ceramic implant.

### 2. Description of Related Art

One-piece tissue level ceramic dental implant with a dual internal and external connexion, that is composed by a distal threaded part that is anchored in the bone and a proximal part that serves for fastening a custom made superstructure such as a crown or denture. In this invention, the term "one-piece" also means one-part. In this invention, "tissue level" means that the most proximal part of the implant is to be placed at gum level as opposed to bone level implants that are supposed to be placed all inside the bone.

Most dental implants in the state of the art are manufactured of a ductile material such as titanium or titanium alloys. With two-part implants, the implant is mostly manufactured of a ductile material such as titanium or titanium alloys and the abutment is often manufactured of a ductile material or of ceramic. The abutment is mostly fastened in the implant with an abutment screw of a ductile material.

Ceramic implants compared to titanium implants however have some big advantages with regard to their excellent biocompatibility, lower plaque and bacterial adhesion, and they are often also preferred for aesthetic reasons.

However, compared to titanium implants, ceramic implants have the disadvantage that ceramic material, in particular, oxide ceramic such as ceramic based on zirconium oxide or ceramic based on aluminium oxide is a brittle material. This in particular leads to an increased proneness to breakage and demands more complicated manufacturing methods in comparison to titanium implants. It remains a challenge to match the technical design of ceramic implant systems to the brittle material characterises of the ceramic material.

The increased proneness to breakage due to the brittle ceramic material has a greater effect with two-part implant systems than with single-part implants. This is because the connection between the ceramic implant implanted in the bone and the abutment arranged in the gum region proximally of the implant is particularly prone to breakage, in particular with a screw connection between the implant and abutment. For this reason, there are single-part ceramic implants as are described in the state of the art which do not also have this additional proneness to breakage caused by the abutment-implant connection.

However, in dental medicine practice, it is indeed two-part implant systems that are often preferred over single-part implants. Due to the different combination possibilities of a multi-part implant system, they are characterised by way of particularly comprehensive application possibilities in dental prosthetics. A further advantage of two-part implants is the fact that they ensure a covered healing-in for the ingrowth of the implant in the bone, whereas one-part implants in the healing-in phase project out of the gum and must be protected from external influences. Often, multi-part implant systems are advantageously also equipped with multiple-comparable implant platforms and with abutments adapted for commercially available female systems. A further great advantage of two-part implant systems is that angled abutments can also be connected to the implant.

Two-part ceramic implant systems are also described in the state of the art, in which systems the abutment is fastened in the implant with a bonding connection. However, it has been found that two-part ceramic implant systems even with a bonding connection also have an increased proneness to breakage compared to comparable single-part ceramic implants.
The reason for this is that the forces applied in the dental crown and prosthesis are transferred to the abutment which is quite small in diameter and prone to brake with high forces. Moreover the abutment transfers the force to the implant creating a wedge effect inside the implant and inducing the implant fracture as well.

In endodontic restorative dentistry, the restoration of root canal teeth with posts have been improved by designing the final crown with a ferrule around the tooth that is of 2mm (Labno 2020). The ferrule is the part of the tooth where the prosthetic crown engagee vertically as opposed to the designs without ferrule where the crown just engages the endodontic abutment. When there is sufficient tooth structure left after the root canal treatment (endodontic) and at least 2mm of ferrule can be created by the dentist, then the forces from the crown don't make a major impact on the internal abutment but instead the forces are transferred externally directly to the tooth. Moreover, in the field of endodontic prosthesis there is a technique/design called "endocrown" which is a dental crown that includes the endodontic post in the same piece. This way the crown is larger in volume and thus much stronger, and also there are less individual parts and less risk of decementation failure. The endocrown with ferrule design has also been confirmed to be a more favorable design in comparison to the standard endocrown when it comes to mechanical failures (Einhorn 2017).

### REFERENCES

- Labno P, Drobnik K. Comparison of horizontal and vertical methods of teeth preparation for a prosthetic crown. J Pre-Clin Clin Res. 2020; 14(1): 25-28. doi: 10.26444/jpccr/116672
- Einhorn M, DuVall N, Wajdowicz M, Brewster J, Roberts H. Preparation Ferrule Design Effect on Endocrown Failure Resistance. J Prosthodont. 2019 Jan;28(1):e237-e242. doi: 10.1111/jopr.12671. Epub 2017 Oct 6. PMID: 28985446.

### BRIEF SUMMARY OF THE INVENTION

It is therefore the object of the present invention, to provide a ceramic implant system which is one-part but also has the advantages of the two-part implant systems, as well as an improved design for a custom-made endocrown with ferrule, which are mentioned above.

This object is achieved by a ceramic implant according to claim 1. The dependent claims claim further embodiments.

The ceramic implant according to the invention comprises an implant with a distal region that contains a thread and is to be inserted in the bone for the fixation, and a proximal region with a dual internal and external connexion to connect the custom-made dental prosthesis (endocrown with ferrule) by means of dental cementation or bonding agents . The dual connexion is composed of an internal connexion with a section shape of a heart and an external connexion or ferrule that is an inclined plane.

The custom-made dental prosthesis (endocrown with ferrule) that fits precisely with the proximal region of the implant, is to be made by a dental professional after receiving the implant impressions by means of conventional silicone or similar material, or by means of a digital intraoral scan. In this invention the term "endocrown" means an endocrown with ferrule, and refers to the custom made dental restoration with the dual internal and external connexion that fits precisely with the invented ceramic implant.

The ceramic dental implant and the custom made endocrown are cemented or bonded or glued together in the patient's mouth after the healing and integration process is accomplished, which normally happens around two to three months after the surgical implantation. The cement or bonding agent to be used is a conventional cement from fixed dental prosthesis, or more specifically a dual cured resin-based glass ionomer .

The ceramic implant system is defined as a one-part dental implant system and, apart from the implant can yet contain further parts such as accessories for surgery like drivers for implantation, and prosthetic accessories like scanning abutments and healing caps.

If not stated otherwise, the term ceramic implant system is also indicated by the term implant system in this text. The text endocrown corresponds to the custom-made crown or prosthesis with dual connexion (internal heart and external ferrule) made by the dental professional. The dental professional corresponds either to the dentist, oral surgeon or dental technician.

The implant of the ceramic implant system consists of ceramic material, in particular of oxide ceramic such as ceramic based on zirconium oxide, in particular yttrium-stabilised ceramic based on zirconium oxide (ISO 13356) or ceramic based on aluminium oxide.

The ceramic implant is a one-part implant system as there is not an additional part needed to restore the implant prosthetically, as opposed to the two-part system that needs an abutment as an intermediate device connecting the implant and the crown. The present invention does not have an abutment part like the conventional one-part implant systems do to secure the dental crown or prosthesis. Instead a dual internal and external connexion firmly secures the endocrown with dental bonding agent without the need of any additional interconnecting part. The one-part implant system is advantageous in the sense that the dental implant treatment is more economic as a result of having to purchase less parts to restore a missing or hopeless tooth. Moreover another advantage of the present invention is, like the two-part implant systems, that there is no implant abutment sticking out of the gum into the oral cavity that is exposed during the healing phase that could receive micromevement from the masticatory forces, which is a well known major risk factor for an implant not integrating within the bone after the healing phase.

Another advantage of the present invention is that the mechanical forces that receive the endocrown is transmitted directly into the implant external surface, as opposed to the two-part ceramic implant systems where the force is transmitted from the crown/ prosthesis to the abutment and from the abutment to the implant, and thus inducing a wedge effect that that can increases significantly the inner forces from inside-out that can break apart the implant.

Another advantage of this ceramic implant system is that the marginal fit of the crown finishes in a knife edge design instead of the conventional flat prosthetic shoulder or chamfers available in the market, where the crown basically sits on top of the implant, as opposed to the present invention where the endocrown not only engages the implant internally but also embraces the implant externally providing the ferrule effect which is known to provide greater crown retention and reduced risk of implant fracture.

The inner cavity of the proximal part of the ceramic implant has two functions. One is to serve as a clamping surface for the implant driver for torquing purposes while inserting the implant into the bone, the other is to serve as retention cavity (female) for the post (male) included in the design endocrown type of restoration. Both the female and male are designed with a heart section in such a precise manner that one fits perfectly into the other, allowing a micro gap or space for the cementing or bonding agent to secure the implant with the endocrown.

The inner cavity of the ceramic implant has a heart shape that fits precisely with the implant driver in an accurately fitting manner so that it can be press fit and have the necessary retention to carry the implant into the implant bone bed and torque into its final place.

The inner heart cavity of the implant has almost parallel walls (0,5º to 1,5º) to provide maximum retention to the custom made dental crown. The external angled plane or ferrule, has an inclination (10º-45º) to provide a perfect marginal fit that seals the connection between the implant and the endocrown, and thus avoiding plaque and bacterial ingrowth.

Since ceramic is a brittle material, hoop stresses and tensile stresses must be avoided whenever possible with ceramic products, in order to prevent a material breakage as much as possible. For this reason, the technical design of the ceramic implant system according to the invention is optimised such that hoop and tensile stresses that could lead to implant breakages are minimal.

A great advantage of the ceramic implant system according to the present invention is the fact that there is a large contact area between the implant and the endocrown resulting in higher retention after the implant and endocrown have been cemented together. This leads to a strong connection and in particular also to a very large force transmission surface between the endocrown and implant. The force transmission surface area is significantly larger in comparison to ceramic implant systems known from the state of the art. Forces acting on the endocrown are transmitted onto the implant in a manner distributed over the force transmission surface, so that comparatively few high local stress peaks and fewer breakages occur with a large force transmission surface. The ceramic implant system is therefore comparatively more resistant to breakage than known two-part ceramic implant systems, with which a force acting on the abutment is only effected in a pointwise manner or over a smaller surface.

The ceramic implant is acid-etched treated to have a roughened surface finish and thus improve the bone osseointegration speed and strength, as well as the soft tissue attachment into the implant surface providing a biologic seal around the implant to avoid bacterial colonization in the apical direction. The etched finish also provides optimal retention for the endocrown after cementation with a bonding agent in the dual internal-external connexion.

Moreover, a greater wall thickness around the inner cavity in the proximal region of the implant decreases the proneness to breakage.

Compared to this, the wall thickness around the inner cavity is smaller if the distal end of the inner cavity projects into the thread zone. In the thread zone, the root diameter of the thread is the important implant diameter for the breakage resistance.

An adhesive or bonding agent is deposited onto the endocrown and/or onto the implant before the endocrown is inserted into the implant, as is known from the state of the art for bonded fixed dental prosthesis.

### BRIEF DESCRIPTION OF THE SEVERAL VIEWS OF THE DRAWINGS

FIG. 1 Lateral view of the implant (a), and section of the proximal part (b);
FIG. 2 Proximal view of the implant with the dual internal-external connexion;
FIG. 3 Lateral view of the implant and endocrown connected together;
FIG. 4 Closer sectional view of the proximal implant (a) and endocrown (b).

### DETAILED DESCRIPTION OF THE INVENTION

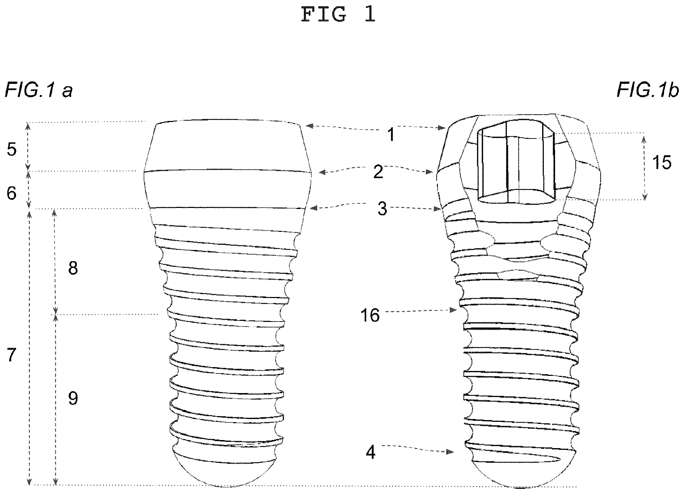

FIG. 1 shows an embodiment example of a ceramic implant, wherein a view onto the exemplary implant is represented in FIG. 1a having a proximal region **1** and a distal region **4.** In Fig.1b the same exemplary implant is now represented with a vertical cut to visualize the internal heart cavity **15** in the proximal region, with a depth of 3 to 4mm. The threaded part 7 of the ceramic implant embodiment corresponds to the intra bony part to provide with the osseointegration. In the proximal region **5** and **6** correspond to the soft tissue area where the connective tissue is attached to the surface of **6** (2 to 3 mm) to provide a bacteriological seal and the epithelium sulcus region 5 (1 to 3 mm)

The threaded region **7** has a conical part **8** (4 to 6 mm) and a cylindrical part **6** (2 to 8 mm) to give primary stability during surgery. A longer or shorter section 9 corresponds to the same embodiment with different lengths to adapt to the available bone in the surgical site. The diameter of the ceramic implant is 3,3 to 4,1 mm at the thread section **9,** and 4,8 to 6,5 mm at point **3,** and 5 to 7 mm at point **2,** and 4,3 to 6 mm at point **1.**

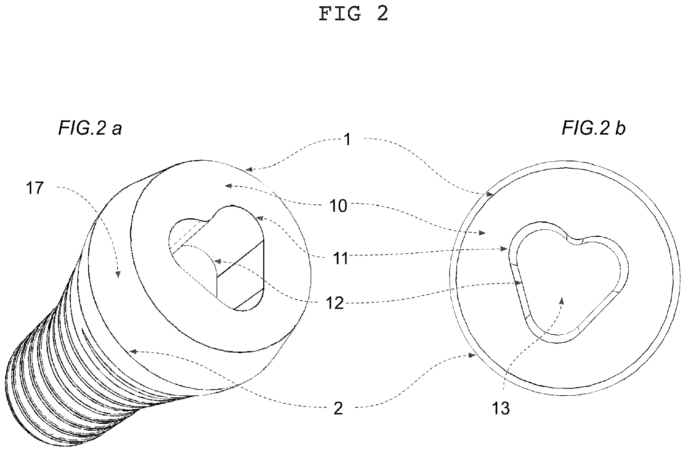

FIG.2 shows an embodiment with a closer view of the proximal region where it is shown the dual internal-external connexion that serves as a connecting region to receive the endocrown by means of cementing or bonding agents. The FIG.2 a is a proximal-lateral view and the FIG.2b is a proximal axial top view. In these embodiments the internal heart cavity **13** is located in the midline of the embodiment with a vertical length extending from **12,** in the most internal point, up to **11** in the most external point. The internal heart cavity is followed by a horizontal plane in region **10** that extends from **11** to **1,** which is then followed by an inclined plane **17** that extends from 1 to 2 with a vertical length of 0,5 to 2 mm.

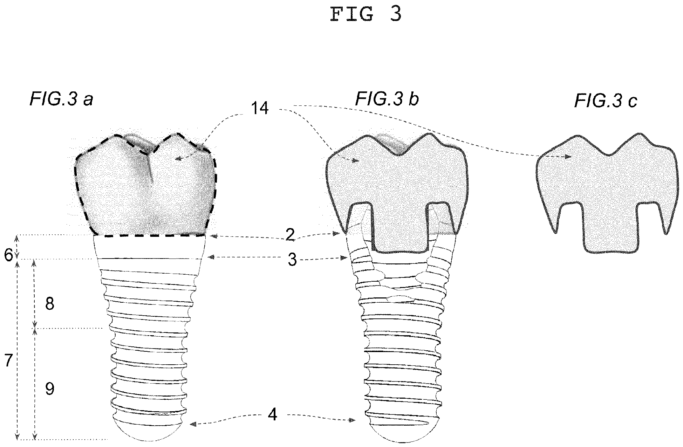

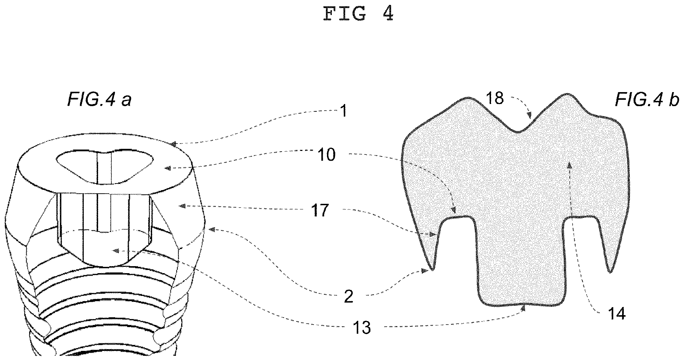

FIG.3 a show an embodiment example of the ceramic implant together with an example of custom made endocrown **14** which is precisely adapted in the proximal area of the implant by means of internal heart connexion and the external connexion that extends apically until the finish line **2.** The connective tissue attachment region is **6** and the endosseous part of the implant is **7,** which corresponds to the thread part of the implant, having a conical part **8** and a cylindrical part **9** that extends until the most distal or apical part **4.** Fig.3b shows the same embodiment of FIG.3a with a vertical cut to show the internal and external connexion. Fig.4c represents the custom made endocrown alone which is described in a closer view in FIG.4b.

FIG.4 a shows a section of the proximal part of the embodiment of a ceramic implant that corresponds to the connection part of the implant with the endocrown **14** represented as an example in Fig.4 b. This endocrown is custom-made for every patient and for each particular tooth in the mouth. The ceramic implant has both an internal and external connexion so that the custom made endocrown can be firmly secured by means of a bonding agent for fixed dental prosthesis. The connexion region is divided in three main regions that correspond to the heart-section inner cavity **13** (3 to 4 mm in depth), the horizontal flat plane **10** (1 to 4 mm), and the external angled inclined plane **17** (0,5 to 3 mm) that finishes at the marginal line **2.** The endocrown in Fig.4b is an example of design where the inner parts **13, 10,17** fit precisely into the ceramic implant embodiment. The occlusal part of the endocrown **18** is to be designed by the dental professional according to the anatomy of the particular tooth to be replaced, as well as the function and esthetic needs.

## Claims

1. We claim a one-piece tissue level ceramic dental implant with a dual internal and external connexion in the proximal region formed by an internal heart-section clamping cavity and an external angled plane, wherein a later custom-made endocrown is made by the dental professional in an accurately fitting manner such that the implant and endocrown are connectable by means of bonding agent.

2. The ceramic implant according to claim 1, wherein the inner heart cavity of the proximal region of the implant has an angulation of 0,5° to 2°.

3. The ceramic implant according to claim 1, wherein the inner heart cavity of the proximal region of the implant has an vertical depth of 3 to 4mm.

4. The ceramic implant according to claim 1, wherein the inner heart cavity has three round edges, each one with a radius of 0,9 mm, and the centers of which form a isosceles triangle.

5. The ceramic implant according to claim 1, wherein the inner heart cavity has two lateral walls of 1,56 mm of width and 3 to 4 mm of depth.

6. The ceramic implant according to claim 1, wherein the outer angled plane of the proximal region of the implant has an inclination of 5º to 45º.

7. The ceramic implant according to claim 1, wherein the outer angled plane of the proximal region of the implant has a vertical height of 0,5 to 3 mm.

8. The ceramic implant system to claim 1, wherein the inner heart cavity can also have a different section shape in example a triangle, tri-lobe or square section with rounded edges.

9. The ceramic implant system to claim 1, wherein the distal threaded region has a conical part of 4 to 5 mm and a cylindrical part of 2 to 8 mm.
